# EUROPÄISCHE PATENTSCHRIFT

(11) **EP 2 031 356 B1**
(45) Veröffentlichungstag und Bekanntmachung des Hinweises auf die Patenterteilung: **19.08.2015**
(21) Anmeldenummer: 08015352.1
(22) Anmeldetag: 29.08.2008
(51) Int. Cl.: G01D 11/24, B29C 45/16

(54) **Sensor**
Sensor
Capteur

(30) Priorität: 01.09.2007 DE 102007041671
(43) Veröffentlichungstag der Anmeldung: 04.03.2009
(73) Patentinhaber: Marquardt GmbH, 78604 Rietheim-Weilheim (DE)
(72) Erfinder: Kampf, Florian, 78532 Tuttlingen (DE); Lanisnik-Bensch, Franz, 78532 Tuttlingen (DE); Lorchheim, Alexander, 72160 Horb-Dettlingen (DE)
(74) Vertreter: Otten, Herbert

(56) Entgegenhaltungen:
- EP-A2- 1 239 266
- GB-A- 2 068 654
- US-A- 4 983 344

## Beschreibung

Die Erfindung betrifft eine Meßvorrichtung nach dem Oberbegriff des Patentanspruchs 1 sowie ein Verfahren zur Herstellung eines Gehäuses für eine Meßvorrichtung nach dem Oberbegriff des Patentanspruchs 4.

Bei der Meßvorrichtung kann es sich um einen Sensor, wie einen Trübungssensor, einen Drucksensor, einen Wegsensor o. dgl., handeln. Solche Meßvorrichtungen dienen vor allem zur direkten Messung von Betriebsparametern in wasserführenden Teilen von Hausgeräten.

Es sind diverse Meßvorrichtungen mit einem Gehäuse bekannt. Im Inneren des Gehäuses befindet sich ein Signalgeber und/oder ein Signalaufnehmer. Aufwendige Maßnahmen zur Abdichtung am Gehäuse sind erforderlich, wenn der Sensor in wasserführenden Umgebungen eingesetzt werden soll. Allgemein gilt das auch für sonstige, elektrische Baugruppen aufnehmende Gehäuse, die mit einer Schutzklasse gegenüber leitfähigen Flüssigkeiten versehen sind.

Weiter ist aus der EP 1 239 266 A2 eine Meßvorrichtung mit einem Gehäuse bekannt, bei der die im Inneren des Gehäuses befindlichen strom- und/oder spannungsführenden Teile des Signalgebers und/oder des Signalaufnehmers und/oder die sonstigen strom- und/oder spannungsführenden Teile zweifach gegenüber dem Äußeren des Gehäuses mittels zwei Gehäusewandungen elektrisch isoliert sind. Mit anderen Worten befindet sich der Signalgeber und/oder Signalaufnehmer in einer Art von Doppelgehäuse, das aus einem Innengehäuse sowie einem Außengehäuse besteht. Die beiden Gehäusewandungen bestehen aus einem thermoplastischen Kunststoff und sind im Zweikomponenten-Spritzgießverfahren, also im 2K-Spritzguß, hergestellt.

Elektrische Stecker mit einem aus einem Innengehäuse sowie einem Außengehäuse bestehenden Doppelgehäuse, das mittels 2K-Spritzguß hergestellt wird, sind auch in den Dokumenten US 4 983 344 A sowie GB 2 068 654 A beschrieben.

Der Erfindung liegt die Aufgabe zugrunde, die Meßvorrichtung in einfacher Art und Weise derart auszugestalten, daß diese in wasserführenden Umgebungen einsetzbar ist. Insbesondere soll für elektrische Baugruppen, beispielsweise für Sensoren, ein Platz sparendes Gehäuse geschaffen werden, das bei Umspülen mit leitfähigen Flüssigkeiten die nötige Schutzklasse gewährleistet.

Diese Aufgabe wird bei einer gattungsgemäßen Meßvorrichtung durch die kennzeichnenden Merkmale des Anspruchs 1 gelöst. Ein Verfahren zur Herstellung eines solchen Gehäuses für die Meßvorrichtung ist in Anspruch 4 angegeben.

Um bei der erfindungsgemäßen Meßvorrichtung zwei voneinander getrennte Gehäusewandungen für das Doppelgehäuse zu erhalten, wird das Kunststoffmaterial so gewählt, daß sich der Kunststoff des Innengehäuses beim Umspritzen mit dem Kunststoff des Außengehäuses nicht stoffschlüssig verbindet. Mit Hilfe der Erfindung ist somit ein Gehäuse für elektrische Baugruppen mit Schutzklasse gegenüber leitfähigen Flüssigkeiten geschaffen, wobei vorteilhafterweise physikalische Eigenschaften sowie funktionswichtige physikalische Parameter gewährleistet sind. Diese sind allenfalls unwesentlich schlechter als beim einwandigen Gehäuse.

Zur einfachen Herstellung der beiden Gehäusewandungen kann das Spritzgießwerkzeug einen Innenkern für die Herstellung des hohlen Innengehäuses aufweisen. Der Innenkern im Spritzgießwerkzeug, der den als Innengehäuse dienenden Vorspritzling trägt, ist so mit Schiebern ausgeführt, daß die Schieber vor dem Umspritzen mit dem Außengehäuse vom Vorspritzling wegbewegbar sind, um so einen Hinterschnitt für das Außengehäuse am Innengehäuse zu erzeugen. Weiterhin kann der befüllte Hinterschnitt des Außengehäuses das Innengehäuse beim Auswerfen aus dem Spritzgießwerkzeug formschlüssig im Innengehäuse halten, um eine einfache Entformung zu bieten.

Weitere Ausgestaltungen der Erfindung sind Gegenstand der Unteransprüche.

Damit das Innengehäuse beim Umspritzen vom Außengehäuse nicht erweicht, kann zweckmäßigerweise der Kunststoff für das Innengehäuse einen höheren Schmelzpunkt als der Kunststoff für das Außengehäuse aufweisen. Zur Steigerung des Formschlusses zwischen Innen- und Außengehäuse kann das zuerst gespritzte Innengehäuse außen rauh ausgeführt sein bevor die Umspritzung mit dem Außengehäuse erfolgt.

Das erfindungsgemäße Verfahren zur Herstellung eines Gehäuses aus Kunststoff, und zwar insbesondere eines Gehäuses für einen Sensor, zeichnet sich dadurch aus, daß zunächst ein erster Kunststoff für das Innengehäuse in ein Spritzgießwerkzeug mit einem Innenkern sowie mit einer ersten Außenform eingespritzt wird. Anschließend wird ein zweiter Kunststoff für das Außengehäuse in das Spritzgießwerkzeug mit einer zweiten Außenform eingespritzt. Bei diesem zweiten Spritzgießvorgang verbleibt das Innengehäuse auf dem Innenkern, was die Handhabung wesentlich erleichtert und auch die Qualität verbessert.

Bei diesem Herstellverfahren weist der Innenkern einen bewegbaren Schieber auf. Der Schieber im Spritzgießwerkzeug wird nach dem Spritzen des Innengehäuses vom Vorspritzling für das Innengehäuse wegbewegt, um so einen Hohlraum zum Innengehäuse freizugeben. Dadurch wird wiederum beim Umspritzen des Innengehäuses mit dem Außengehäuse ein Hinterschnitt am Außengehäuse zum Festhalten des Innengehäuses gebildet. In einfacher Art und Weise ist somit eine sichere Befestigung zwischen dem Innengehäuse sowie dem Außengehäuse gegeben.

In weiterer Ausgestaltung kann zur weiteren Verbesserung der Befestigung zwischen dem Innengehäuse sowie dem Außengehäuse der Vorspritzling für das Innengehäuse außen rauh ausgeführt werden. Es ist jedoch auch äußeres Aufrauhen des Vorspritzlings möglich, bevor dieser mit dem Außengehäuse umspritzt wird.

Um in einfacher sowie kostengünstiger Art ein doppelwandiges Gehäuse zu erzeugen, werden bei dem Herstellverfahren der erste sowie der zweite Kunststoff derart gewählt, daß sich die beiden Kunststoffe beim Spritzgießen nicht stoffschlüssig verbinden. Ebenso können die beiden Kunststoffe so gewählt werden, daß der erste Kunststoff einen höheren Schmelzpunkt als der zweite Kunststoff aufweist.

Zusammenfassend läßt sich für eine besonders bevorzugte Ausgestaltung, insbesondere für einen mit Schutzklasse versehenen Trübungssensor mit doppeltem Gehäuse nachfolgendes feststellen. Das Gehäuse wird als 2K-Spritzguß-Teil hergestellt, wobei sich der Kunststoff des Innengehäuses beim Umspritzen mit dem Außengehäuse nicht stoffschlüssig verbinder. In einer vorteilhaften Auskleidung der Erfindung wird der den Vorspritzling tragende Innenkern so mit Schiebern ausgeführt, dass diese vor dem Umspritzen mit dem Außengehäuse vom Vorspritzling weg bewegt werden und der befüllte Hinterschnitt des Außengehäuses das Innengehäuses beim Auswerfen formschlüssig im Innengehäuse hält. In einer weiteren vorteilhaften Auskleidung der Erfindung wird das zuerst gespritzte Innengehäuse außen rauh ausgeführt, bevor die Umspritzung mit dem Außengehäuse erfolgt.

Viele elektrische Baugruppen sind sehr kompakt ausgeführt, um in ihren Einbaulagen minimalen Platzbedarf zu haben. Bestimmte physikalische Sensoren benötigen außerdem möglichst dünne Wände, damit bestimmte physikalische Größen, beispielsweise die Transparenz oder der Wärmewiderstand, klein bleiben. Sollen solche Baugruppen auch noch in leitfähigen Flüssigkeiten, wie der Waschlauge in Waschmaschinen, arbeiten, werden besonders hohe Isolationsanforderungen gestellt, damit Menschenleben nicht gefährdet werden können. Diese Anforderungen werden beispielsweise in der Norm EN 60335 beschrieben.

Ein bevorzugtes Mittel zum sicheren Gewährleisten der Isolation selbst bei mechanischen Beschädigungen ist die Verwendung von doppelten Hausungen. Dabei werden Beschädigungen des Außengehäuses an der Trennstelle zum Innengehäuse unterbrochen und ein Eindringen von Flüssigkeit zu den elektrischen Teilen im Inneren wird verhindert. Doppelten Gehäusen stehen jedoch oft neben dem erhöhten Teile- und Montageaufwand der verfügbare Platz und die große Wanddicke entgegen. Bei Trübungssensoren sind auch noch die Verschlechterung der optischen Transparenz durch das zusätzliche dicke Innengehäuse und die vermehrten Grenzschichtübergänge sehr nachteilig. Bei Baugruppen, die einen geringen Wärmewiderstand zum Medium und trotzdem doppelte Isolation benötigen, beispielsweise bei Temperaturfühlcrn in Haushaltsgeräten, ist die geringe Gesamt-Wanddicke ebenfalls Bedingung für kurze Reaktionszeiten.

Die mit der Erfindung erzielten Vorteile bestehen insbesondere darin, daß bei der vorgeschlagenen Lösung all diese Nachteile verhindert werden. Dadurch daß das zuerst gespritzte Innengehäuse bis zum Umspritzen mit dem Außengehäuse auf dem Innenkern verbleibt, kann es sehr dünn ausgeführt werden. Außerdem brauchen keine Sicherheitsabstände beider Gehäuse und Festigkeiten des Innengehäuses geplant zu werden, die bei einer Montage separater Teile nötig wären. Die Gehäuse-Gesamtdicke wird so nur minimal vergrößert.

Damit die Haftung des Innen- zum Außengehäuse beim Auswerfen nicht gestört wird, wird der Innenkern mit einem Schieber ausgeführt, der vor dem Umspritzen bewegt wird und einen Hohlraum zum Innengehäuse freigibt, der beim Umspritzen ausgefüllt wird. Dieser Hinterschnitt des Außengehäuses hält das Innengehäuse zuverlässig formschlüssig in seiner Lage zum Außengehäuse fest Auch bei späteren mechanischen Beanspruchungen kann sich das Innengehäuse nicht vom Außengehäuse lösen.

Wird der Vorspritzling zusätzlich außen rauh ausgeführt oder zusätzlich aufgerauht, gibt es beim Umspritzen mit dem Außengehäuse eine zusätzliche formschlüssige Verzahnung der Teile. Wird das Außengehäuse durch mechanische Einwirkungen beschädigt, kann das Wasser nicht in den Zwischenraum gesaugt werden.

Ausführungsbcispiclc der Erfindung mit verschiedenen Weiterbildungen und Ausgestaltungen sind in den Zeichnungen dargestellt und werden im folgenden näher beschrieben. Es zeigen
- Fig. 1: ein Gehäuse für einen Sensor in Draufsicht,
- Fig. 2: einen Schnitt entlang der Linie 2-2 in Fig. 1
- Fig. 3: einen Schnitt entlang der Linie 3-3 in Fig.1 mit vergrößertem Detail-Ausschnitt,
- Fig. 4: einen Schnitt entlang der Linie 4-4 in Fig. 3,
- Fig. 5: einen Innenkern eines Spritzgießwerkzeuges für das Gehäuse in einer Ansicht entsprechend Fig. 3,
- Fig. 6: den Innenkern des Spritzgießwerkzeuges für das Gehäuse in einer Ansicht entsprechend Fig. 2,
- Fig. 7: den Innenkern des Spritzgießwerkzeuges für das Gehäuse in einer weiteren Ausführungsform,
- Fig. 8: den Innenkern aus Fig. 7 mit gespritztem Innengehäuse und
- Fig. 9: den Innenkern wie in Fig. 8, wobei ein Schieber am Innenkern bewegt ist.

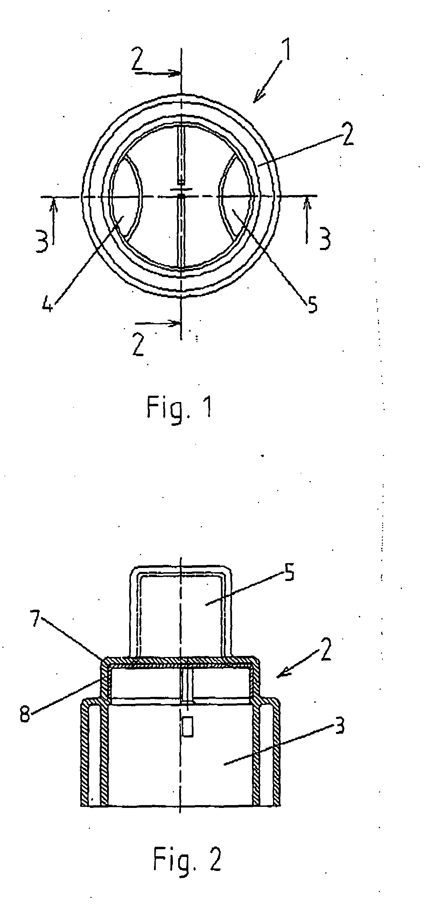

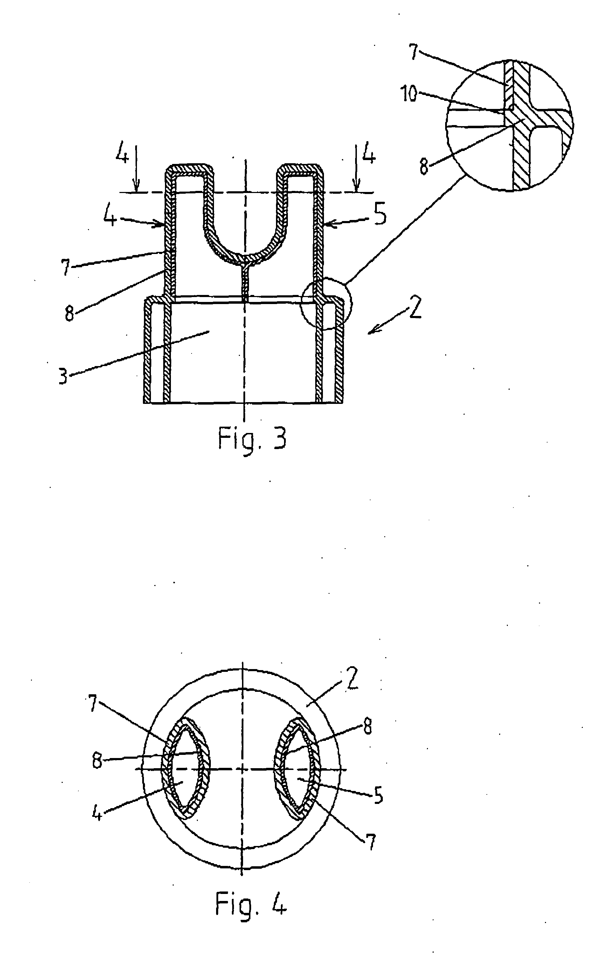

In Fig. 1 ist das Gehäuse 2 für eine als Sensor 1 ausgebildete Meßvorrichtung zu sehen. Bei dem Sensor 1 handelt es sich um einen Trübungssensor. Im Inneren 3 (siehe Fig. 2) des Gehäuses 2 befinden sich auf einer Leiterplatte angeordnete elektrische und/oder elektronische Bauteile des Trübungssensors 1, die jedoch nicht weiter gezeigt sind. Weiterhin weist das Gehäuse 2 zwei Ansätze 4,5 auf, in denen sich ein Signalgeber, beispielsweise eine Leuchtdiode, sowie ein Signalaufnehmer, beispielsweise ein Fotoempfänger, für den Trübungssensor 1 befinden. Die im Inneren 3 des Gehäuses 2 befindlichen strom- und/oder spannungsführenden Teile des Signalgebers und/oder des Signalaumehmers und/oder sonstige strom- und/oder spannungsführende Teile sind zweifach gegenüber dem Äußeren des Gehäuses 2 mittels zwei Gehäusewandungen 7, 8 elektrisch isoliert, wie der Fig. 3 oder der Fig. 4 zu entnehmen ist. Insbesondere bilden die beiden Gehäusewandungen 7, 8 eine Art von Doppelgehäuse, bestehend aus einem Innengehäuse 7 sowie einem Außengehäuse 8. Die beiden Gehäusewandungen 7, 8 sind im Zweikomponenten-Spritzgießverfahren (2K-Spritzguß) hergestellt, wie nachfolgend noch näher erläutert ist.

Die beiden Gehäusewandungen 7, 8 bestehen in üblicher Weise aus Kunststoff, und zwar aus einem thermoplastischen Kunststoff. Dabei sind die Kunststoffsorten so gewählt, daß sich der erste Kunststoff des Innengehäuses 7 beim Umspritzen mit dem zweiten Kunststoff des Außengehäuses 8 nicht stoffschlüssig verbindet. Dadurch erhält man zwei an sich separate Gehäusewandungen 7, 8, die jedoch ohne dazwischen befindlicher Luftschicht unmittelbar aneinander anliegen. Ferner bietet es sich an, daß der Kunststoff für das Innengehäuse 7 einen höheren Schmelzpunkt als der Kunststoff für das Außengehäuse 8 aufweist. Somit wird ein Erweichen des Innengehäuses 7 beim Umspritzen mit dem Außengehäuse 8 vermieden.

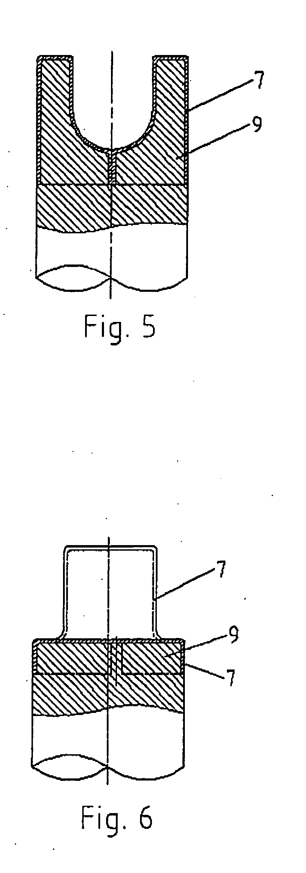

Die Herstellung des Gehäuses 2 verläuft wie folgt. Das Spritzgießwerkzeug zur Herstellung der beiden Gehäusewandungen 7, 8 weist einen Innenkern 9 für die Herstellung des hohlen Innengehäuses 7 auf, wie anhand der Fig. 5 oder der Fig. 6 zu sehen ist. Der Außenkern bzw. die Außenfonn des Spritzgießwerkzeuges ist dort insoweit nicht gezeigt Zunächst wird das Innengehäuse 7 auf den Innenkern 9 aufgespritzt, indem der erste Kunststoff für das Innengehäuse 7 in das Spritzgießwerkzeug mit dem Innenkern sowie mit der ersten Außenform eingespritzt wird. Anschließend wird der Außenkern des Spritzgießwerkzeugs für das Innengehäuse 7 gegen den Außenkern bzw. die Außenform des Spritzgießwerkzeugs für das Außengehäuse 8 ausgetauscht. Dabei verbleibt jedoch der Innenkern 9 mitsamt dem gespritzten Innengehäuse 7 im Spritzgießwerkzeug, so daß der Innenkern 9 den als Innengehäuse 7 dienenden Vorspritzling trägt. Danach wird das Außengehäuse 8 gespritzt, wobei das Innengehäuse 7 entsprechend umspritzt wird, indem der zweite Kunststoff für das Außengehäuse 8 in das Spritzgießwerkzeug mit der zweiten Außenform eingespritzt wird. Schließlich wird dann das die doppelte Gehäusewandung 7, 8 aufweisende Gehäuse 2 entformt. Wie unmittelbar ersichtlich ist, verbleibt das Innengehäuse 7 während des gesamten Spritzgießvorgangs auf dem Innenkern 9 und ist somit vor Beschädigung bewahrt. Desweiteren kann das zuerst gespritzte Innengehäuse 7 außen rauh ausgeführt sein und/oder außen aufgerauht werden bevor die Umspritzung mit dem Außengehäuse 8 erfolgt, wodurch eine gewisse Haftung des Innengehäuses 7 am Außengehäuse 8 gegeben ist.

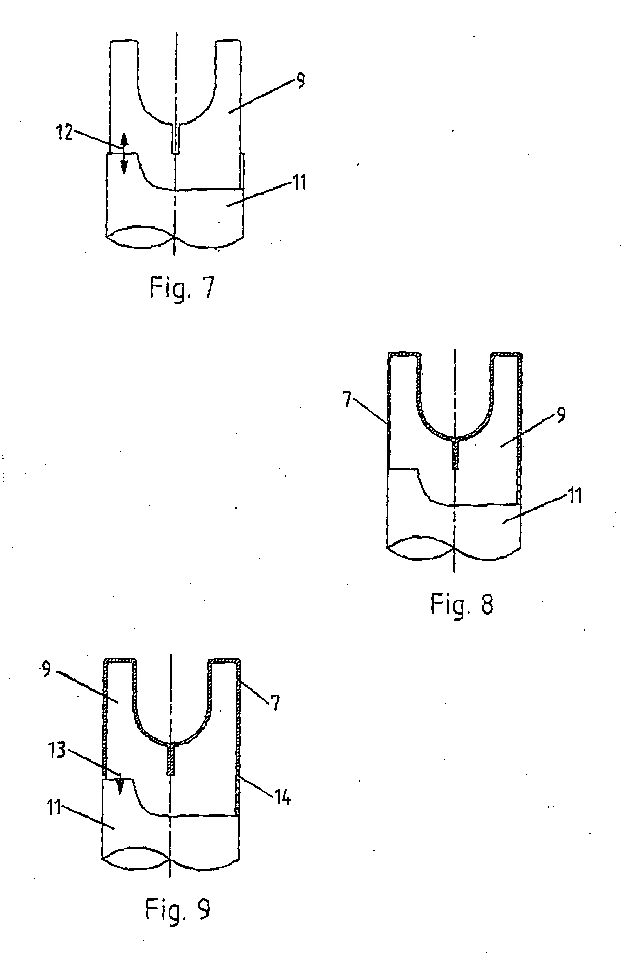

In einer weiteren Ausführung besitzt das Außengehäuse 8 einen Hinterschnitt 10, welcher im vergrößerten Detail-Ausschnitt der Fig. 3 zu sehen ist. Der Hinterschnitt 10 fixiert das Innengehäuse 7 im Außengehäuse 8 und verhindert somit deren eventuelles Auseinanderfallen. Zur Herstellung eines solchen Gehäuses 2 mit Hinterschnitt 10 ist der Tnnenkern 9 des Spritzgießwerkzeugs mit einem Schieber 11 ausgestaltet, wie in Fig. 7 gezeigt ist, wobei der Schieber 11 entsprechend dem Richtungspfeil 12 in Bezug auf den Innenkern 9 bewegbar ist. Zunächst liegt der Schieber 11 vollständig am Innenkern 9 an und das Innengehäuse 7 wird als Vorspritzling hergestellt. In Fig. 8 ist das den Vorspritzling bildende Innengehäuse 7 nach dessen Herstellung zu sehen. Danach wird der Schieber 11 vor dem Umspritzen des Innengehäuses 7 mit dem Außengehäuse 8 vom Vorspritzling wegbewegt, was in Fig. 9 mit dem Richtungspfeil 13 dargestellt ist. Dadurch wird zwischen dem Innengehäuse 7 und dem Schieber 11 eine Ausnehmung 14 gebildet. Wird nun anschließend das Innengehäuse 7 mit dem Außengehäuse 8 umspritzt, so wird dabei die Ausnehmung 14 mit Kunststoff befüllt, wobei der Hinterschnitt 10 gebildet wird. Wie bereits erwähnt hält der befüllte Hinterschnitt 10 des Außengehäuses 8 das Innengehäuse 7 beim Auswerfen aus der Spritzgießform formschlüssig im Außengehäuse 8.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann ein solches Gehäuse auch für sonstige Sensoren, wie Drucksensoren, Wegsensoren o. dgl., Verwendung finden. Im übrigen eignet sich das Gehäuse auch für mit Wasser in Kontakt kommende elektrische Baugruppen in wasserführenden Geräten, insbesondere in Haushaltsgeräten. Neben Trübungssensoren kann es sich beispielsweise um Temperaturfühler, Trommelbeleuchtungen o. dgl. in diesen Baugruppen handeln.

### Bezugszeichen-Listc:

- 1:: Sensor / Trübungssensor
- 2:: Gehäuse
- 3:: Inneres (von Gehäuse)
- 4,5:: Ansatz (an Gehäuse)
- 7:: Gehäusewandung /Innengehäuse
- 8:: Gehäusewandung / Außengehäuse
- 9:: Innenkern
- 10:: Hinterschnitt
- 11:: Schieber
- 12,13:: Richtungspfeil
- 14:: Ausnehmung

## Patentansprüche

1. Meßvorrichtung, insbesondere Sensor (1), wie Drucksensor, Wegsensor, Trübungssensor o. dgl., mit einem Gehäuse (2), und mit einem im Inneren (3) des Gehäuses (2) befindlichen Signalgeber und/oder Signalaufnehmer, wobei das Gehäuse (2) in einer Art von Doppelgehäuse, bestehend aus einem Innengehäuse (7) sowie einem Außengehäuse (8) ausgestaltet ist, so daß die strom- und/oder spannungsführenden Teile des Signalgebers und/oder des Signalaufnehmers und/oder die sonstigen strom- und/oder spannungsführenden Teile zweifach gegenüber dem Äußeren des Gehäuses (2) mittels zwei Gehäusewandungen (7, 8) elektrisch isoliert sind, wobei die beiden Gehäusewandungen (7, 8) aus thermoplastischem Kunststoff bestehen, und wobei die beiden Gehäusewandungen (7, 8) im Zweikomponenten-Spritzgießverfahren hergestellt sind, **dadurch gekennzeichnet, daß** sich der Kunststoff des Innengehäuses (7) beim Umspritzen mit dem Kunststoff des Außengehäuses (8) nicht stoffschlüssig verbindet, und daß das Außengehäuse (8) einen Hinterschnitt (10) besitzt, derart daß das Innengehäuse (7) im Außengehäuse (8) fixiert ist.

2. Meßvorrichtung nach Anspruch 1, **dadurch gekennzeichnet, daß** der Kunststoff für das Innengehäuse (7) einen höheren Schmelzpunkt als der Kunststoff für das Außengehäuse (8) aufweist.

3. Meßvorrichtung nach Anspruch 1 oder 2, **dadurch gekennzeichnet, daß** das Innengehäuse (7) außen rauh ausgeführt ist, derart daß ein Formschluß zwischen Innengehäuse (7) und Außengehäuse (8) gebildet ist.

4. Verfahren zur Herstellung eines Gehäuses aus Kunststoff für eine Meßvorrichtung nach einem der vorhergehenden Anspruche, **dadurch gekennzeichnet, daß** zunächst ein erster Kunststoff für das Innengehäuse (7) in ein Spritzgießwerkzeug mit einem Innenkern (9) sowie mit einer ersten Außenform eingespritzt wird, daß anschließend ein zweiter Kunststoff für das Außengehäuse (8) in das Spritzgießwerkzeug mit einer zweiten Außenform eingespritzt wird, während das Innengehäuse (7) auf dem Innenkern (9) verbleibt, und daß der Innenkern (9) einen bewegbaren Schieber (11) aufweist, wobei der Schieber (11) im Spritzgießwerkzeug nach dem Spritzen des Innengehäuses (7) vom Vorspritzling für das Innengehäuse (7) wegbewegt wird, um so einen Hohlraum zum Innengehäuse (7) freizugeben, derart daß beim Umspritzen des Innengehäuses (7) mit dem Außengehäuse (8) ein Hinterschnitt (10) am Außengehäuse (8) zum formschlüssigen Festhalten des Innengehäuses (7) gebildet wird.

5. Verfahren zur Herstellung eines Gehäuses nach Anspruch 4, **dadurch gekennzeichnet, daß** der Vorspritzling für das Innengehäuse (7) außen rauh ausgeführt wird und/oder außen aufgerauht wird.

6. Verfahren zur Herstellung eines Gehäuses nach Anspruch 4 oder 5, **dadurch gekennzeichnet, daß** der erste sowie der zweite Kunststoff derart gewählt werden, daß sich die beiden Kunststoffe beim Spritzgießen nicht stoffschlüssig verbinden.

7. Verfahren zur Herstellung eines Gehäuses nach einem der Ansprüche 4 bis 6, **dadurch gekennzeichnet, daß** die beiden Kunststoffe so gewählt werden, daß der erste Kunststoff einen höheren Schmelzpunkt als der zweite Kunststoff aufweist.

## Claims

1. Measuring device, in particular a sensor (1), such as a pressure sensor, position sensor, turbidity sensor or the like, with a housing (2), and with a signal generator and/or signal receiver contained inside (3) the housing (2), whereby the housing (2) is in the form of a kind of double housing comprising an inner casing (7) and an outer casing (8) so that the current and/or voltage-carrying parts of the signal generator and/or the signal receiver and/or the other current and/or voltage-carrying parts are electrically doubly insulated with respect to the exterior of the housing (2) by means of two housing walls (7, 8), whereby the two housing walls (7, 8) are made of thermoplastic resin, and whereby the two housing walls (7, 8) are produced in a two-component injection moulding process, **characterised in that** the plastic of the inner casing (7) is not firmly bonded with the plastic of the outer casing (8) during the encapsulation, and whereby the outer casing (8) has an undercut (10) to enable the inner casing (7) to be fixed in the outer casing (8).

2. Measuring device according to claim 1, **characterised in that** the plastic for the inner casing (7) has a higher melting point than the plastic for the outer casing (8).

3. Measuring device according to claim 1 or 2, **characterised in that** the Inner casing (7) has a rough exterior so that a form-fit is formed between the inner casing (7) and outer casing (8).

4. Method for the production of a plastic housing for a measuring device according to any one of the preceding claims, **characterised in that** initially a first plastic material for the inner casing (7) is injected into an injection mould with an internal core (9) as well as with a first outer form, whereby a second plastic for the outer casing (8) is subsequently injected into the injection mould with a second outer form, while the inner casing (7) remains on the internal core (9), and whereby the internal core (9) comprises a movable slide (11), and whereby the slide (11) in the injection mould is moved away from the preform for the inner casing (7) following the injection of the inner casing (7), in order to so open up a cavity in the inner casing (7) that during encapsulation of the inner casing (7) by the outer casing (8), an undercut (10) is formed on the outer casing (8) for the form-fit holding of the inner casing (7).

5. Method for the production of a housing according to claim 4, **characterised in that** the preform for the inner casing (7) is rough outside and/or roughened outside.

6. Method for the production of a housing according to claim 4 or 5, **characterised in that** the first and the second plastic are so selected that the two plastics do not firmly bond together in the injection moulding.

7. Method for the production of a housing according to one of the claims 4 to 6, **characterised in that** the two plastics are so selected that the first plastic has a higher melting point than the second plastic.

## Revendications

1. Dispositif de mesure, en particulier capteur (1), tel que capteur de pression, capteur de déplacement, capteur de turbidité ou similaire, comportant un boîtier (2) et comportant un émetteur de signaux et/ou un récepteur de signaux situés à l'intérieur (3) du boîtier (2), ledit boîtier (2) étant réalisé sous la forme d'un double boîtier constitué d'un boîtier intérieur (7) et d'un boîtier extérieur (8), de telle sorte que les composants, guidant le courant et/ou la tension, de l'émetteur de signaux et/ou du récepteur de signaux et/ou tout autre composant guidant le courant et/ou la tension bénéficient d'une double isolation électrique par rapport à l'extérieur du boîtier (2) grâce aux deux parois (7, 8) du boîtier, les deux parois (7, 8) du boîtier étant réalisées dans une matière thermoplastique et les deux parois (7, 8) du boîtier étant fabriquées par un procédé de moulage par injection de deux composants, **caractérisé en ce que**, au moment du surmoulage, la matière plastique du boîtier intérieur (7) ne se lie pas par adhérence de matière à la matière plastique du boîtier extérieur (8), et **en ce que** le boîtier extérieur (8) comporte une contre-dépouille (10) de telle sorte que le boîtier intérieur (7) est fixé dans le boîtier extérieur (8).

2. Dispositif de mesure selon la revendication 1, **caractérisé en ce que** la matière plastique pour le boîtier intérieur (7) possède un point de fusion plus élevé que celui de la matière plastique pour le boîtier extérieur (8).

3. Dispositif de mesure selon la revendication 1 ou 2, **caractérisé en ce que** le boîtier intérieur (7) est réalisé avec une rugosité à l'extérieur, de telle sorte qu'il se forme un assemblage par conjugaison de forme entre le boîtier intérieur (7) et le boîtier extérieur (8).

4. Procédé pour la réalisation d'un boîtier en matière plastique pour un dispositif de mesure selon l'une des revendications précédentes, **caractérisé en ce que**, tout d'abord, une première matière plastique pour le boîtier intérieur (7) est injectée dans le moule à injection avec un noyau intérieur (9) et une première empreinte extérieure, **en ce que**, ensuite, une deuxième matière plastique pour le boîtier extérieur (8) est injectée dans le moule à injection avec une deuxième empreinte extérieure, tandis que le boîtier intérieur (7) reste sur le noyau intérieur (9), et **en ce que** le noyau intérieur (9) comporte un tiroir (11) mobile, ledit tiroir (11) dans le moule à injection étant éloigné de l'ébauche pour le boîtier intérieur (7) après l'injection du boîtier intérieur (7), afin de libérer ainsi une cavité par rapport au boîtier intérieur (7), de telle sorte qu'au moment du surmoulage du boîtier extérieur (8) sur le boîtier intérieur (7), il se forme une contre-dépouille (10) sur le boîtier extérieur (8) pour une fixation par conjugaison de forme du boîtier intérieur (7).

5. Procédé pour la réalisation d'un boîtier selon la revendication 4, **caractérisé en ce que** l'ébauche pour le boîtier intérieur (7) est réalisée avec une rugosité extérieure et/ou a été rendue rugueuse à l'extérieur.

6. Procédé pour la réalisation d'un boîtier selon la revendication 4 ou 5, **caractérisé en ce que** la première, ainsi que la deuxième matière plastique sont choisies de telle sorte que les deux matières plastiques ne se lient pas par adhérence de matière au moment du moulage par injection.

7. Procédé pour la réalisation d'un boîtier selon l'une quelconque des revendications 4 à 6, **caractérisé en ce que** les deux matières plastiques sont choisies de telle sorte que la première matière plastique possède un point de fusion plus élevé que celui de la deuxième matière plastique.
